(19) Europäisches Patentamt
European Patent Office
Office européen des brevets

(11) EP 0 890 311 A2

(12) EUROPEAN PATENT APPLICATION

(43) Date of publication:
13.01.1999 Bulletin 1999/02

(51) Int. Cl.$^6$: A01N 47/36
// (A01N47/36, 43:10, 43:76)

(21) Application number: 98108876.8

(22) Date of filing: 15.05.1998

(84) Designated Contracting States:
AT BE CH CY DE DK ES FI FR GB GR IE IT LI LU MC NL PT SE
Designated Extension States:
AL LT LV MK RO SI

(30) Priority: 12.06.1997 US 49407 P
10.06.1997 US 49527 P

(71) Applicant:
E.I. DU PONT DE NEMOURS AND COMPANY
Wilmington Delaware 19898 (US)

(72) Inventor: Bozarth, Gene Allen
Hockessin, Delaware 19707 (US)

(74) Representative:
Woodman, Derek et al
Frank B. Dehn & Co.,
European Patent Attorneys,
179 Queen Victoria Street
London EC4V 4EL (GB)

# (54) Herbicidal mixtures

(57) This invention relates to herbicidal mixtures comprising azimsulfuron and one or more herbicides selected from thenylchlor and pentoxazone, herbicidal compositions of said mixtures, and a method for the use of said mixtures to control undesired vegetation.

EP 0 890 311 A2

## Description

### FIELD OF THE INVENTION

The present invention relates to mixtures of herbicides that have a synergistic effect on weeds.

### BACKGROUND OF THE INVENTION

The control of undesired vegetation is extremely important in achieving high crop efficiency. Achievement of selective control of the growth of weeds especially in such useful crops as rice, soybeans, sugar beets, corn, potatoes, wheat, barley, tomatoes and plantation crops among others is very desirable. Unchecked weed growth in such useful crops can cause significant reduction in productivity and thereby result in increased costs to the consumers. The control of undesired vegetation in noncrop areas is also important. The need for finding products that achieve such results continues to be commercially important.

Combinations of herbicides are typically used to broaden the spectrum of plant control or enhance the level of control of any given species through additive effect. Certain rare combinations surprisingly give a greater-than-additive or synergistic effect. Such valuable combinations have now been discovered.

U.S. Patent 4,746,353, U.S. Patent 4,802,907 and European Patent Application Publication 496,347-A2 disclose individual compounds used in the mixtures of this invention, but none of these references disclose the mixtures or their surprising synergistic utility.

### SUMMARY OF THE INVENTION

This invention relates to mixtures of *N*-[[(4,6-dimethoxy-2-pyrimidinyl)amino]-carbonyl]-1-methyl-4-(2-methyl-2*H*-tetrazol-5-yl)-1*H*-pyrazole-5-sulfonamide (azimsulfuron, Formula **I**)

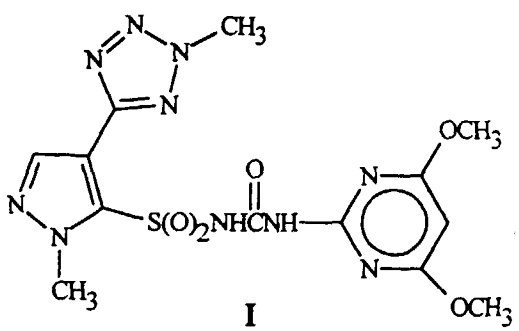

**I**

or an agriculturally suitable salt thereof
with one or more compounds selected from 2-chloro-*N*-(2,6-dimethylphenyl)-*N*-[(3-methoxy-2-thienyl)methyl]acetamide (thenylchlor, Formula **IIa**),

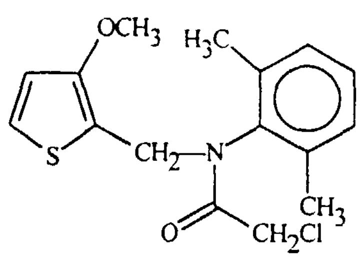

**IIa**

and 3-[4-chloro-5-(cyclopentyloxy)-2-fluorophenyl]-5-(1-methylethylidine)-2,4-oxazolidinedione (pentoxazone, Formula **IIb**),

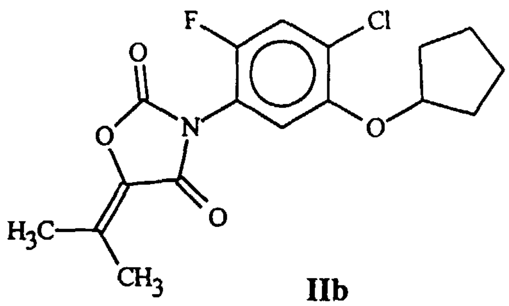

IIb

which have now been discovered to synergistically control weeds. This invention also relates to herbicidal compositions comprising herbicidally effective amounts of the aforesaid mixtures and at least one of the following: surfactant, solid or liquid diluent. This invention also relates to a method of controlling undesired vegetation comprising applying to the locus of the vegetation herbicidally effective amounts of the aforesaid mixtures.

The mixtures of the invention preferred for enhanced herbicidal utility include:

(a) the compound of Formula **I** and the compound of Formula **IIa**, and
(b) the compound of Formula **I** and the compound of Formula **IIb**.

Also preferred are herbicidal compositions comprising herbicidally effective amounts of said preferred mixtures and at least one of the following: surfactant, solid or liquid diluent.

Preferred methods of controlling undesired vegetation comprises applying to the locus of the vegetation herbicidally effective amounts of the preferred mixtures or compositions thereof.

For reason of weed control spectrum and/or crop selectivity, the preferred application of the mixtures of this invention is in rice crops, especially in paddy rice cultivation.

DETAILS OF THE INVENTION

The Formula **I** compound can be prepared as described in U.S. Patent 4,746,353. The synthesis involves the coupling of the pyrazolesulfonamide of Formula **1** with the heterocyclic carbamate of Formula **2**.

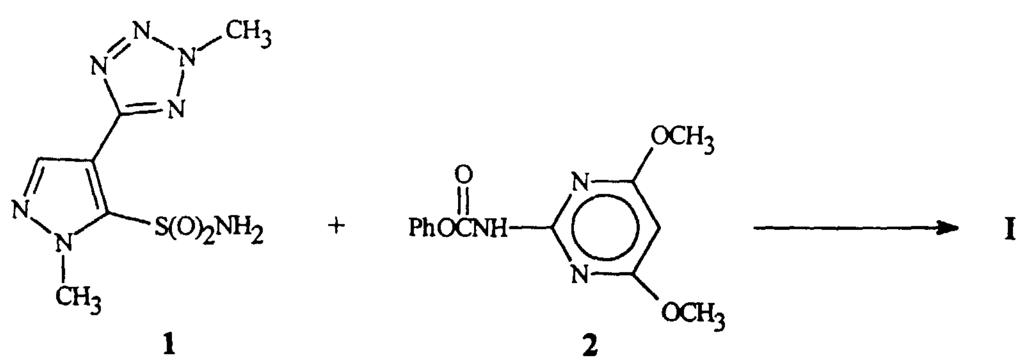

The mixtures of the present invention can include the sulfonylurea compound of Formula **I** as one or more of its agriculturally suitable salts. These can be prepared in a number of ways known in the art. For example, metal salts can be made by contacting the sulfonylurea of Formula **I** with a solution of an alkali or alkaline earth metal salt having a sufficiently basic anion (e.g., hydroxide, alkoxide, carbonate or hydride). Quaternary amine salts can be made by similar techniques.

Salts of the sulfonylurea of Formula **I** can also be prepared by exchange of one cation for another. Cationic exchange can be effected by direct contact of an aqueous solution of a salt of the sulfonylurea of Formula **I** (e.g., alkali or quaternary amine salt) with a solution containing the cation to be exchanged. This method is most effective when the desired salt containing the exchanged cation is insoluble in water and can be separated by filtration.

Exchange may also be effected by passing an aqueous solution of a salt of a sulfonylurea of Formula **I** (e.g., an

alkali metal or quaternary amine salt) through a column packed with a cation-exchange resin containing the cation to be exchanged for that of the original salt and the desired product is eluted from the column. This method is particularly useful when the desired salt is water soluble (e.g., a potassium, sodium or calcium salt).

The Formula **IIa** compound can be prepared as described in U.S. Patent 4,802,907. The synthesis involves coupling of the aniline of Formula **3** with the acyl chloride of Formula **4**.

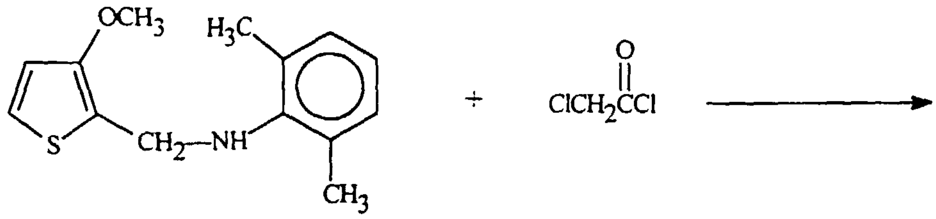

IIa

3 4

The Formula **IIb** compound can be prepared as described in European Patent Application Publication 496,347-A2. The synthesis involves cyclization of the 2-hydroxyester of Formula **5** with the isocyanate of Formula **6**.

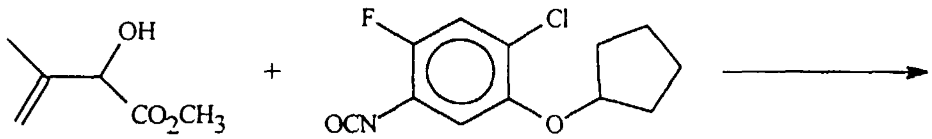

IIb

5 6

## Formulation

The mixtures of the Formula **I** and Formulae **IIa** and **IIb** compounds can be formulated in a number of ways:

(a) the Formula **I** and Formulae **IIa** and **IIb** compounds can be formulated separately and applied separately or applied simultaneously in an appropriate weight ratio, e.g., as a tank mix; or
(b) the Formula **I** and Formulae **IIa** and **IIb** compounds can be formulated together in the proper weight ratio.

Mixtures of the Formula **I** and Formulae **IIa** and **IIb** compounds will generally be used in formulation with an agriculturally suitable carrier comprising a liquid or solid diluent and/or a surfactant wherein the formulation is consistent with the physical properties of the active ingredients, mode of application and environmental factors such as soil type, moisture and temperature. Useful formulations include liquids such as solutions (including emulsifiable concentrates), suspensions, emulsions (including microemulsions and/or suspoemulsions) and the like which optionally can be thickened into gels. Useful formulations further include solids such as dusts, powders, granules, pellets, tablets, films, and the like which can be water-dispersible ("wettable") or water-soluble. Active ingredients can be (micro)encapsulated and further formed into a suspension or solid formulation; alternatively the entire formulation of active ingredient can be encapsulated (or "overcoated"). Encapsulation can control or delay release of the active ingredients. Sprayable formulations can be extended in suitable media and used at spray volumes from about one to several hundred liters per hectare. High-strength compositions are primarily used as intermediates for further formulation.

The formulations will typically contain effective amounts of active ingredient, diluent and surfactant within the following approximate ranges which add up to 100 percent by weight.

| | Weight Percent | | |
|---|---|---|---|
| | Active Ingredient | Diluent | Surfactant |
| Water-Dispersible and Water-soluble Granules, Tablets and Powders. | 5-90 | 0-94 | 1-15 |
| Suspensions,Emulsions, Solutions (including Emulsifiable Concentrates) | 5-50 | 40-95 | 0-15 |
| Dusts | 1-25 | 70-99 | 0-5 |
| Granules and Pellets | 0.01-99 | 5-99.99 | 0-15 |
| High Strength Compositions | 90-99 | 0-10 | 0-2 |

Typical solid diluents are described in Watkins, et al., *Handbook of Insecticide Dust Diluents and Carriers*, 2nd Ed., Dorland Books, Caldwell, New Jersey. Typical liquid diluents are described in Marsden, *Solvents Guide*, 2nd Ed., Interscience, New York, 1950. *McCutcheon's Detergents and Emulsifiers Annual*, Allured Publ. Corp., Ridgewood, New Jersey, as well as Sisely and Wood, *Encyclopedia of Surface Active Agents*, Chemical Publ. Co., Inc., New York, 1964, list surfactants and recommended uses. All formulations can contain minor amounts of additives to reduce foam, caking, corrosion, microbiological growth and the like, or thickeners to increase viscosity.

Surfactants include, for example, polyethoxylated alcohols, polyethoxylated alkylphenols, polyethoxylated sorbitan fatty acid esters, dialkyl sulfosuccinates, alkyl sulfates, alkylbenzene sulfonates, organosilicones, *N,N*-dialkyltaurates, lignin sulfonates, naphthalene sulfonate formaldehyde condensates, polycarboxylates, and polyoxyethylene/polyoxypropylene block copolymers. Solid diluents include, for example, clays such as bentonite, montmorillonite, attapulgite and kaolin, starch, sugar, silica, tale, diatomaceous earth, urea, calcium carbonate, sodium carbonate and bicarbonate, and sodium sulfate. Liquid diluents include, for example, water, *N,N*-dimethylformamide, dimethyl sulfoxide, *N*-alkylpyrrolidone, ethylene glycol, polypropylene glycol, paraffins, alkylbenzenes, alkylnaphthalenes, oils of olive, castor, linseed, tung, sesame, corn, peanut, cotton-seed, soybean, rape-seed and coconut, fatty acid esters, ketones such as cyclohexanone, 2-heptanone, isophorone and 4-hydroxy-4-methyl-2-pentanone, and alcohols such as methanol, cyclohexanol, decanol and tetrahydrofurfuryl alcohol.

Solutions, including emulsifiable concentrates, can be prepared by simply mixing the ingredients. Chemically stabilized aqueous sulfonylurea or agriculturally suitable sulfonylurea salt dispersions are taught in U.S. 4,936,900. Solution formulations of sulfonylureas with improved chemical stability are taught in U.S. 4,599,412. Dusts and powders can be prepared by blending and, usually, grinding as in a hammer mill or fluid-energy mill. Suspensions are usually prepared by wet-milling; see, for example, U.S. 3,060,084. Granules and pellets can be prepared by spraying the active material upon preformed granular carriers or by agglomeration techniques. See Browning, "Agglomeration", *Chemical Engineering*, December 4, 1967, pp 147-48, *Perry's Chemical Engineer's Handbook*, 4th Ed., McGraw-Hill, New York, 1963, pages 8-57 and following, and WO 91/13546. Pellets can be prepared as described in U.S. 4,172,714. Water-dispersible and water-soluble granules can be prepared as taught in U.S. 4,144,050, U.S. 3,920,442 and DE 3,246,493. Tablets can be prepared as taught in U.S. 5,180,587, U.S. 5,232,701 and U.S. 5,208,030. Films can be prepared as taught in GB 2,095,558 and U.S. 3,299,566.

For further information regarding the art of formulation, see U.S. 3,235,361, Col. 6, line 16 through Col. 7, line 19 and Examples 10-41; U.S. 3,309,192, Col. 5, line 43 through Col. 7, line 62 and Examples 8, 12, 15, 39, 41, 52, 53, 58, 132, 138-140, 162-164, 166, 167 and 169-182; U.S. 2,891,855, Col. 3, line 66 through Col. 5, line 17 and Examples 1-4; Klingman, *Weed Control as a Science*, John Wiley and Sons, Inc., New York, 1961, pp 81-96; and Hance et al., *Weed Control Handbook*, 8th Ed., Blackwell Scientific Publications, Oxford, 1989.

In the following Examples, all percentages are by weight and all formulations are prepared in conventional ways.

Example A

| High Strength Concentrate | |
|---|---|
| azimsulfuron | 1.0% |
| thenylchlor | 97.5% |
| silica aerogel | 0.5% |

(continued)

| High Strength Concentrate | |
|---|---|
| synthetic amorphous fine silica | 1.0%. |

Example B

| Wettable Powder | |
|---|---|
| azimsulfuron | 21.7% |
| thenylchlor | 43.3% |
| dodecylphenol polyethylene glycol ether | 2.0% |
| sodium ligninsulfonate | 4.0% |
| sodium silicoaluminate | 6.0% |
| montmorillonite (calcined) | 23.0%. |

Example C

| Granule | |
|---|---|
| azimsulfuron | 1.7% |
| thenylchlor | 8.3% |
| attapulgite granules (low volatile matter, 0.71/0.30 mm; U.S.S. No. 25-50 sieves) | 90.0%. |

Example D

| Extruded Pellet | |
|---|---|
| azimsulfuron | 0.6% |
| thenylchlor | 24.4% |
| anhydrous sodium sulfate | 10.0% |
| crude calcium ligninsulfonate | 5.0% |
| sodium alkylnaphthalenesulfonate | 1.0% |
| calcium/magnesium bentonite | 59.0%. |

Example E

| High Strength Concentrate | |
|---|---|
| azimsulfuron | 0.7% |
| pentoxazone | 97.8% |
| silica aerogel | 0.5% |
| synthetic amorphous fine silica | 1.0%. |

Example F

| Wettable Powder | |
|---|---|
| azimsulfuron | 21.7% |
| pentoxazone | 43.3% |
| dodecylphenol polyethylene glycol ether | 2.0% |
| sodium ligninsulfonate | 4.0% |
| sodium silicoaluminate | 6.0% |
| montmorillonite (calcined) | 23.0%. |

Example G

| Granule | |
|---|---|
| azimsulfuron | 0.9% |
| pentoxazone | 9.1% |
| attapulgite granules (low volatile matter, 0.71/0.30 mm; U.S.S. No. 25-50 sieves) | 90.0%. |

Example H

| Extruded Pellet | |
|---|---|
| azimsulfuron | 0.5% |
| pentoxazone | 24.5% |
| anhydrous sodium sulfate | 10.0% |
| crude calcium ligninsulfonate | 5.0% |
| sodium alkylnaphthalenesulfonate | 1.0% |
| calcium/magnesium bentonite | 59.0%. |

Example I

| High Strength Concentrate | |
|---|---|
| azimsulfuron | 6.2% |
| thenylchlor | 36.9% |
| pentoxazone | 55.4% |
| silica aerogel | 0.5% |
| synthetic amorphous fine silica | 1.0%. |

Utility

Mixtures of the herbicidal compounds of Formula **I** and Formulae **IIa** and **IIb** are now discovered to provide unexpected synergistic control of selected weeds while retaining selective safety to certain annual monocot plant species such as rice. The mixtures of the invention are effective in selectively controlling the growth of undesirable upland and

aquatic grass, broadleaf, and sedge weed species while having little or no effect upon transplanted or direct seeded japonica or indica rice. The synergism these mixtures provide in controlling barnyardgrass without injury to rice is both very valuable and remarkable, as both barnyardgrass and rice are grasses. By applying the mixtures of this invention to dry or flooded soil infested with weed seed, or application to the foliage of weed plants, or application to water covering foliage, seeds or plant parts, weeds are killed or sufficiently. injured to provide the rice crop a competitive advantage. Application to direct seeded rice at the preemergence to 4-leaf stage, application to transplanted rice at the 1.0-4.0-leaf stage and application to weeds at the preemergence to 3-leaf stage is preferable. Application can be made to intermittently or continuous flood rice culture.

Herbicidally effective amounts of the compounds of Formula **I** (azimsulfuron) and Formula **IIa** (thenylchlor) will vary depending on environmental conditions, formulation, method of application, amount and type of vegetation present, etc. The use rate ratios of Formula **I** to Formula **IIa** are in general 1:2 to 1:100, with ratios of 1:5 to 1:40 preferred for most uses. In general, the Formula **I** compound is applied at a rate from 3 to 30 g ai/ha and the Formula **IIa** compound is applied at a rate from 50 to 300 g ai/ha. Preferably, the Formula **I** compound is applied at a rate from 5 to 20 g ai/ha, and the Formula **IIa** compound is applied at a rate from 75 to 250 g ai/ha.

Herbicidally effective amounts of the compounds of Formula **I** (azimsulfuron) and Formula **IIb** (pentoxazone) will vary depending on environmental conditions, formulation, method of application, amount and type of vegetation present, etc. The use rate ratios of Formula **I** to Formula **IIb** are in general 1:2 to 1:150, with ratios of 1:10 to 1:50 preferred for most uses. In general, the Formula **I** compound is applied at a rate from 3 to 30 g ai/ha and the Formula **IIb** compound is applied at a rate from 50 to 500 g ai/ha. Preferably, the Formula **I** compound is applied at a rate from 5 to 20 g ai/ha, and the Formula **IIb** compound is applied at a rate from 75 to 400 g ai/ha.

One skilled in the art can readily determine application rates and ratios of the herbicide of Formula **I** to the herbicides of Formulae **IIa** and **IIb** as well as timing necessary for the desired level of weed control and crop safety.

For practical use as herbicide treatments, the mixtures of the invention may be employed in further admixture with other known herbicides and agricultural crop protection chemicals to provide additional spectrum of activity against additional weed species. Herbicides which may be mixed include, but are not limited to, cyhalofop-butyl, cafenstrole, dimepiperate, epoprodan, etobenzanid, pretilachlor, thiobencarb, pyributicarb, pyrazolate, benxofenap, bromobutid, mefenacet, anilofos and benfuresate. Particularly useful herbicide mixture partners are the sulfonylurea herbicides bensulfuron methyl, metsulfuron methyl, chlorimuron ethyl, pyrazosulfuron ethyl, imazosulfuron, cinosulfuron and cyclosulfamuron.

Additionally, the mixtures of the invention may be combined with agriculturally acceptable additives such as surfactants, safeners, spreaders, emulsifiers or fertilizers, to improve performance. The mixtures of the invention will generally be used as formulated compositions.

The following Tests demonstrate the control efficacy of the compounds of this invention against specific weeds. The weed control afforded by the compounds is not limited, however, to these species. In these tests, Compound 1 is the Formula **I** compound. azimsulfuron, Compound 2 is the Formula **IIa** compound thenylchlor, and Compound 3 is the Formula **IIb** compound pentoxazone.

## BIOLOGICAL EXAMPLES OF THE INVENTION

### Test A Protocol

Individual containers of barnyardgrass (*Echinochloa crus-galli*) were seeded and allowed to grow until the 2-leaf stage of development. A Tama silt loam soil was used for the propagation. Rice (*Oryza sativa*, cv. Cypress) was pregerminated and seeded on the soil surface and allow to grow to the 3-leaf stage of development. Prior to treatment the water depth in all containers was adjusted to approximately 3 cm. Compounds 1 and 2 were formulated in a non-phytotoxic solvent mixture and applied to the surface of the water in each container.

Treated plants and untreated controls were maintained under greenhouse conditions for 14 days at which time treated plants were compared to untreated controls and visually evaluated. Plant response ratings, summarized in Table A, are based upon a 0 to 100 scale where 0 is no effect and 100 is complete control.

Colby's equation was used to calculate the expected additive herbicidal effect of the mixtures of Compound 1 with Compound 2. Colby's equation (Colby, S. R. "Calculating Synergistic and Antagonistic Responses of Herbicide Combinations," *Weeds*, 15(1), pp 20-22 (1967)) calculates the expected additive effect of herbicidal mixtures, and for two active ingredients is of the form:

$$P_{a+b} = P_a + P_b - (P_a P_b / 100)$$

wherein $P_{a+b}$ is the percentage effect of the mixture expected from additive contribution of the individual components,

$P_a$ is the observed percentage effect of the first active ingredient at the same use rate as in the mixture, and $P_b$ is the observed percentage effect of the second active ingredient at the same use rate as in the mixture.

Combinations of Compound 1 with Compound 2 are surprisingly found to provide better control of certain weeds than expected by calculation from Colby's equation, thus demonstrating synergism. Table A lists visual assessments of control of a specific weed with Compound 1 and Compound 2 applied alone as single active ingredients, applied as a mixture of the two active ingredients of Compound 1 and Compound 2, and the expected additive effect of the herbicidal mixture of Compound 1 and Compound 2 (Colby's equation). Different ratios of Compound 1 to Compound 2, and different formulation types, also provide useful weed control from the combination of the two herbicides.

## TABLE A*

Effect of Compound 1 and Compound 2 as Active Ingredients Alone and in Mixture

| Compound 1 | Compound 2 | Rice | | Barnyardgrass | |
|---|---|---|---|---|---|
| | | Observed | Expected† | Observed | Expected |
| *Alone* | | | | | |
| 5 | 0 | 0 | – | 30 | – |
| 10 | 0 | 10 | – | 70 | – |
| 0 | 90 | 0 | – | 70 | – |
| 0 | 180 | 40 | – | 98 | – |
| *Mixtures* | | | | | |
| 5 | 90 | 30 | 0 | 85 | 79 |
| 10 | 90 | 10 | 10 | 98 | 91 |
| 5 | 180 | 40 | 40 | 99 | 99 |
| 10 | 180 | 40 | 46 | 100 | 99 |

* Application rates are expressed in g ai/ha for both Compound 1 and Compound 2. Data are reported as percent control.

† Expected from the Colby Equation.

As can be seen from this test, combinations of azimsulfuron (Compound 1) with 90 g/ha of thenylchlor (Compound 2) surprisingly increased barnyardgrass control over that expected. In the case of 5 g of azimsulfuron + 90 g of thenylchlor, control was increased from poor (79%) to good (85%). In the case of 10 g azimsulfuron + 90 g thenylchlor, control went from expected of 91% (good) to 98% (excellent). At the higher rate of thenylchlor (180 g/ha) the control was already excellent (98%) so there was no opportunity to show synergism at this high rate in this test. This synergism allows the mixtures of the invention to be used at substantially lower application rates than would be needed based on addition of the effects of the individual components using the Colby equation. The increase in rice injury noted at the low rate of 5 g of azimsulfuron + 90 g of thenylchlor is apparently an aberration, as no increase in injury occurred at the higher rate of 10 g of azimsulfuron or at the higher rates of thenylchlor. The directly water-seeded rice in this test is more sensitive to herbicide injury than is transplanted rice, which is more common agricultural practice. Furthermore, rice is much more tender and susceptible to herbicide injury when grown in a greenhouse rather than outdoors. These greenhouse results thus suggest little or no crop injury at application rates as high as 10 g/ha of azimsulfuron and 180 g/ha of thenylchlor under field conditions.

Test B Protocol

Individual containers of barnyardgrass (*Echinochloa crus-galli*) were seeded and allowed to grow until the 2-leaf

stage of development. A Tama silt loam soil was used for the propagation. Rice (*Oryza sativa*, cv. Cypress) was pregerminated and seeded on the soil surface and allow to grow to the 3-leaf stage of development. Prior to treatment the water depth in all containers was adjusted to approximately 3 cm. Compounds 1 and 3 were formulated in a non-phytotoxic solvent mixture and applied to the surface of the water in each container.

Treated plants and untreated controls were maintained under greenhouse conditions for 14 days at which time treated plants were compared to untreated controls and visually evaluated. Plant response ratings, summarized in Table B, are based upon a 0 to 100 scale where 0 is no effect and 100 is complete control.

Combinations of Compound 1 with Compound 3 are surprisingly found to provide better control of certain weeds than expected by calculation from Colby's equation, thus demonstrating synergism. Table B lists visual assessments of control of a specific weed with Compound 1 and Compound 3 applied alone as single active ingredients, applied as a mixture of the two active ingredients of Compound 1 and Compound 3, and the expected additive effect of the herbicidal mixture of Compound 1 and Compound 3 (Colby's equation). Different ratios of Compound 1 to Compound 3, and different formulation types, also provide useful weed control from the combination of the two herbicides.

**TABLE B***

Effect of Compound 1 and Compound 3 as Active Ingredients Alone and in Mixture

| Compound 1 | Compound 3 | Rice (direct-seeded) | | Barnyardgrass | |
|---|---|---|---|---|---|
| | | Observed | Expected† | Observed | Expected |
| *Alone* | | | | | |
| 5 | 0 | 0 | – | 30 | – |
| 10 | 0 | 0 | – | 70 | – |
| 0 | 75 | 0 | – | 60 | – |
| 0 | 150 | 0 | – | 90 | – |
| *Mixtures* | | | | | |
| 5 | 75 | 0 | 0 | 95 | 72 |
| 10 | 75 | 0 | 0 | 95 | 88 |
| 5 | 150 | 0 | 0 | 90 | 93 |
| 10 | 150 | 0 | 0 | 98 | 97 |

* Application rates are expressed in g ai/ha for both Compound 1 and Compound 3. Data are reported as percent control.

† Expected from the Colby Equation.

As can be seen from this test, combinations of azimsulfuron (Compound 1) with 75 g/ha of pentoxazone (Compound 3), which would be expected to provide less than 90% control of barnyardgrass, were surprisingly found to give much better efficacy. For example, while 5 g/ha of azimsulfuron and 75 g/ha of pentoxazone would be expected to cause only 72% injury to barnyardgrass, 95% was observed. This is the difference between optimal and suboptimal levels of control. This synergism allows the mixtures of the invention to be used at substantially lower application rates than would be needed based on addition of the effects of the individual components using the Colby equation. In contrast to the synergy on barnyardgrass, no injury was observed on direct-seeded rice.

Test C Protocol

Transplanted rice (*Oryza sativa*, cv. Cypress) was grown to the 5-leaf stage in Tama silt loam soil prior to treatment. Barnyardgrass (*Echinochloa crus-galli*) was at the two-leaf stage. Chemicals were formulated and added directly to the paddy water. There were 3 replications and the pots where arranged on the greenhouse bench in a completely randomized design. Water depth was maintained at 3 cm throughout the experiment. Fourteen days after treatment the level

of rice injury and barnyardgrass control were determined by visual evaluation. Plant response ratings, summarized in Table C, are based upon a 0 to 100 scale where 0 is no effect and 100 is complete control. Colby's equation was used to calculate the expected additive herbicidal effect of the mixtures of Compound 1 with Compound 3.

**TABLE C***

Effect of Compound 1 and Compound 3 as Active Ingredients Alone and in Mixture

| Compound 1 | Compound 3 | Rice (transplanted) | | Barnyardgrass | |
|---|---|---|---|---|---|
| | | Observed | Expected† | Observed | Expected |
| *Alone* | | | | | |
| 5 | 0 | 0 | – | 37 | – |
| 10 | 0 | 0 | – | 73 | – |
| 15 | 0 | 0 | – | 88 | – |
| 0 | 50 | 0 | – | 0 | – |
| 0 | 100 | 0 | – | 33 | – |
| 0 | 150 | 0 | – | 40 | – |
| *Mixtures* | | | | | |
| 5 | 50 | 0 | 0 | 57 | 37 |
| 5 | 100 | 0 | 0 | 65 | 58 |
| 5 | 150 | 0 | 0 | 67 | 62 |
| 10 | 50 | 0 | 0 | 84 | 73 |
| 10 | 100 | 0 | 0 | 96 | 82 |
| 10 | 150 | 0 | 0 | 95 | 84 |
| 15 | 50 | 0 | 0 | 94 | 88 |
| 15 | 100 | 3 | 0 | 99 | 92 |

* Application rates are expressed in g ai/ha for both Compound 1 and Compound 3. Data are reported as percent control.

† Expected from the Colby Equation.

As can be seen from this test, combinations of azimsulfuron (Compound 1) with pentoxazone (Compound 3) gave significantly better than expected control of barnyardgrass control for all ratios tested. Synergism can provide the greatest increase in effect when the expected effect is relatively low. In this test 5 g/ha of azimsulfuron with 50 g/ha of pentoxazone gave 57% control compared to 37% expected. When the expected effect is already close to 100%, the observed effect cannot be much greater, but in this test, synergism from 15 g/ha of azimsulfuron and 100 g/ha of pentoxazone still resulted in a significant increase in control to 99% from 92% expected. The synergism causes mixtures of azimsulfuron with pentoxazone to give significantly better control than expected at lower use rates. In contrast to the synergy on barnyardgrass, essentially no injury was observed on transplanted rice.

## Claims

1. A herbicidal mixture comprising the compound of Formula **I**

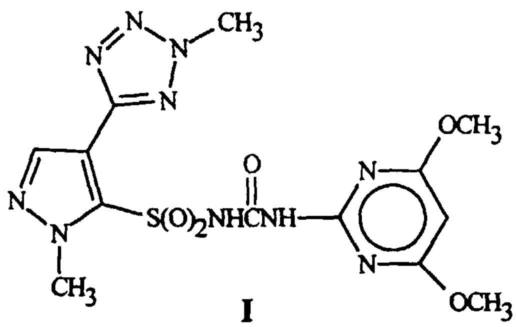

**I**

which is *N*-[[(4,6-dimethoxy-2-pyrimidinyl)amino]carbonyl]-1-methyl-4-(2-methyl-2*H*-tetrazol-5-yl)-1*H*-pyrazole-5-sulfonamide (azimsulfuron), or an agriculturally suitable salt thereof,
and one or more compounds selected from the compound of Formula **IIa**

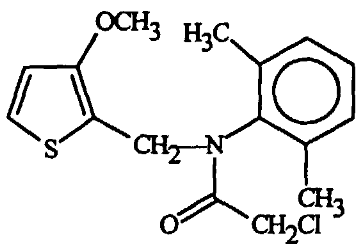

**IIa**

which is 2-chloro-*N*-(2,6-dimethylphenyl)-*N*-[(3-methoxy-2-thienyl)methyl]acetamide (thenylchlor) and the compound of Formula **IIb**

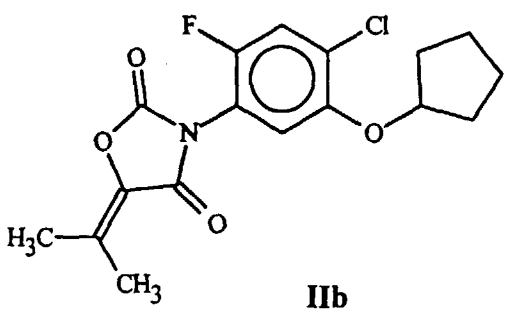

**IIb**

which is 3-[4-chloro-5-(cyclopentyloxy)-2-fluorophenyl]-5-(1-methylethylidine)-2,4-oxazolidinedione (pentoxazone).

**2.** The herbicidal mixture of Claim 1 comprising the compound of Formula **I** and the compound of Formula **IIa**.

**3.** The herbicidal mixture of Claim 1 comprising the compound of Formula **I** and the compound of Formula **IIb.**

**4.** The herbicidal mixture of any of Claims 1, 2 or 3 further comprising a compound selected from the group consisting of bensulfuron methyl, metsulfuron methyl, propanil, chlorimuron ethyl, pyrazosulfuron ethyl, imazosulfuron, cinosulfuron and cyclosulfamuron.

**5.** An agriculturally suitable composition for controlling the growth of undesired vegetation comprising an effective amount of a herbicidal mixture of any of Claims 1, 2 or 3 and at least one of the following: surfactant, solid or liquid diluent.

**6.** A method for controlling the growth of undesired vegetation comprising contacting the locus to be protected with a

herbicidally effective amount of a herbicidal mixture of any of Claims 1, 2 or 3.

**7.** The method of Claim 6 wherein the locus to be protected is a rice crop.

**8.** The method of Claim 7 wherein the rice crop is grown in a flooded paddy.